# EUROPÄISCHE PATENTSCHRIFT

(11) **EP 2 016 295 B1**
(45) Veröffentlichungstag und Bekanntmachung des Hinweises auf die Patenterteilung: **01.03.2017**
(21) Anmeldenummer: 07728261.4
(22) Anmeldetag: 18.04.2007
(51) Int. Cl.: A47B 13/02, F16B 12/48, F16B 12/52

(54) **VERBINDUNGSEINRICHTUNG FÜR MÖBEL**
CONNECTING DEVICE FOR FURNITURE
DISPOSITIF D'ASSEMBLAGE POUR MEUBLES

(30) Priorität: 05.05.2006 DE 202006007300 U
(43) Veröffentlichungstag der Anmeldung: 21.01.2009
(73) Patentinhaber: Hettich-Heinze GmbH & Co. KG, 32139 Spenge (DE)
(72) Erfinder: KARRASCH, Thorsten, 32049 Herford (DE); AMON, Michael Rene, 32469 Petershagen (DE)
(74) Vertreter: Dantz, Jan Henning
(86) Internationale Anmeldenummer: PCT/EP2007/053799
(87) Internationale Veröffentlichungsnummer: WO 2007/128663

(56) Entgegenhaltungen:
- EP-A- 0 458 042
- DE-U1- 20 002 201
- DE-U1- 29 709 829
- GB-A- 2 035 069
- US-A- 5 934 639

## Beschreibung

Die vorliegende Erfindung betrifft eine Verbindungseinrichtung nach dem Oberbegriff des Anspruchs 1.

Aus der DE 40 16 486 ist eine Verbindungseinrichtung zur lösbaren Befestigung eines Tischbeines an einer Tischplatte bekannt, bei der an dem Tischbein hervorstehende Bolzen vorgesehen sind, die in Bohrungen eingefügt werden. Zur Festlegung des Tischbeines mit den Bolzen wird eine Verschlussplatte verschwenkt, an der Aufnahmeschlitze ausgebildet sind, in die die Bolzen eingefügt werden können. Dabei weisen die Bolzen eine Nut auf, in die ein Rand Spannplatte eingefügt werden kann, damit das Tischbein nicht mehr von der Tischplatte abgenommen werden kann.

Nachteilig bei dieser Konstruktion ist die Befestigung der Verbindungsplatte an der Tischplatte, was über Schraubverbindungen erfolgt. Solche Schraubverbindungen besitzen nur eine begrenzte Festigkeit und zudem können nur Tischplatten eingesetzt werden, in die Schrauben mit einer gewissen Länge eingedreht werden können. Für sogenannte Wabenplatten, bei denen viele Hohlräume in einer mittleren Zwischenschicht einer Platte vorgesehen sind, ist diese Art der Befestigung nicht geeignet. Zudem kann es passieren, dass bei längerem Gebrauch die Bolzen an der Platte in geringem Maße beweglich sind, sodass das Tischbein wackeln kann.

Die EP 458042 offenbart eine Verbindungseinrichtung, bei der an der Unterseite einer Tischplatte ein Verbindungsteil festgelegt wird, das mit einem weiteren Verbindungsteils eines Möbelfußes gekoppelt werden kann. Das Verbindungsteil wird dabei über Holzschrauben an der Tischplatte befestigt.

Es ist daher Aufgabe der vorliegenden Erfindung, eine Verbindungseinrichtung für Möbel zu schaffen, die einfach zu montieren ist und ein hohes Maß an Stabilität gewährleistet.

Diese Aufgabe wird mit einer Verbindungseinrichtung mit den Merkmalen des Anspruches 1 gelöst.

Die Verbindungseinrichtung umfasst ein Halteelement, dass mit einer Möbelplatte verbunden ist, und ein Montageteil, das mit einem Fußelement koppelbar ist. Das Halteelements ist mit der Möbelplatte verklebt und an dem Halteelement ist ein metallisches Zwischenstück festgelegt, an dem das Montageteil montiert ist. Dadurch kann die Verbindungseinrichtung auch bei Möbelplatten eingesetzt werden, die zur Befestigung von Schraubverbindungen ungeeignet sind, beispielsweise weil die Möbelplatte zu dünn ist oder mehrschichtig aufgebaut ist und eine mittlere Schicht mit zahlreichen Hohlräumen aufweist, an denen Schrauben keine Aufnahme besitzen. Zudem lässt sich das Halteelement durch Verkleben schnell und einfach an der Möbelplatte montieren. Die Möbelplatte kann mit den Halteelementen vormontiert geliefert werden.

Gemäß einer bevorzugten Ausgestaltung der Erfindung ist das Halteelement in einer Aufnahme der Möbelplatte eingefügt. Dadurch kann das Halteelement besonders stabil festgelegt sein, insbesondere auch im Hinblick auf Kippbewegungen eines Fußelementes. Vorzugsweise ist dabei das Halteelement schalenförmig ausgebildet und an einem Rand ist zumindest teilweise ein parallel zu einem Boden verlaufender Flansch ausgebildet, wobei das Halteelement an dem Boden und an dem Flansch mit der Möbelplatte verklebt ist. Dadurch kann eine Verklebung in unterschiedlichen Ebenen stattfinden, was die Festigkeit erhöht.

Für eine definierte Festlegung des Halteelementes sind vorzugsweise an dem Boden Stege angeformt, sodass zwischen dem Boden und einer benachbarten Fläche der Möbelplatte Aufnahmen für Klebemittel ausgebildet sind. Dann kann sich dort das Klebemittel ausbreiten und für eine passgenaue Verbindung sorgen.

Für eine einfache Montage sind an dem Boden auf der zum Zwischenstück gewandten Seite Profilierungen ausgebildet, die mit Profilelementen an das Zwischenstück koppelbar sind. Dabei kann das Zwischenstück über die Profilelemente und die Profilierungen an dem Halteelement zur Vorfixierung festgeklemmt werden, was die Montage vereinfacht. Nach der Vorfixierung kann dann eine weitere mechanische Festlegung, beispielsweise über Schrauben, erfolgen.

Das Halteelement ist vorzugsweise aus Kunststoff hergestellt, sodass Klebeverbindungen auf einfache Weise hergestellt werden können.

Gemäß einer weiteren Ausgestaltung der Erfindung ist an dem metallischen Zwischenstück mindestens eine hervorstehende Kante als Kantenschutz für die Möbelplatte ausgebildet. Denn die Möbelplatte kann gerade im Eckbereich leicht beschädigt werden, sodass ein Schutz durch eine metallische Kante die Lebensdauer des Möbels verlängern kann.

Die Möbelplatte ist als Wabenplatte ausgebildet, bei der zwischen zwei Platten eine wabenförmige Zwischenschicht mit einer Vielzahl von Hohlräumen ausgebildet ist. Dadurch kann die Möbelplatte bei geringem Gewicht auch vergleichsweise dick ausgebildet sein, was ein optisch ansprechendes Erscheinungsbild gewährleistet. Dabei wird der Boden des Halteelementes mit der ersten Platte der Wabenplatte und der Flansch des Halteelementes mit der zweiten Platte der Wabenplatte verklebt.

Gemäß einem weiteren Aspekt der Erfindung weist das Montageteil Klemmelemente auf, die für eine klemmende Festlegung über eine Kurvenführung verschiebbar sind. Dadurch kann das Montageteil dauerhaft stabil festgelegt sein, wobei durch das Anklemmen der Klemmelemente ein Wackeln eines Fußelementes, beispielsweise eines Tischbeines vermieden wird.

Gemäß einer bevorzugten Ausgestaltung ist an dem Montageteil ein verschwenkbarer Hebel gelagert, mittels dem die Klemmelemente verschiebbar sind. Dadurch kann das Montageteil mit dem Fußelement werkzeugfrei montiert werden.

Vorzugsweise sind die Klemmelemente als hervorstehende Klötze ausgebildet, die in Aufnahmen eingreifen. Die Klötze können dabei zumindest von einer Seite mit einer Schräge versehen sein, die sich zum Ende hin erweitert. Dadurch kann beim Festklemmen des Montageteils auch eine Sicherung gegen ein Herausziehen des Montageteils aus den Aufnahmen gewährleistet werden.

Gemäß der Erfindung ist das Montageteil an einem metallischen Zwischenstück festlegbar, das an dem Halteelement festgelegt ist.

Die Erfindung wird nachfolgend anhand einem Ausführungsbeispiel mit Bezug auf die beigefügten Zeichnungen näher erläutert. Es zeigen:

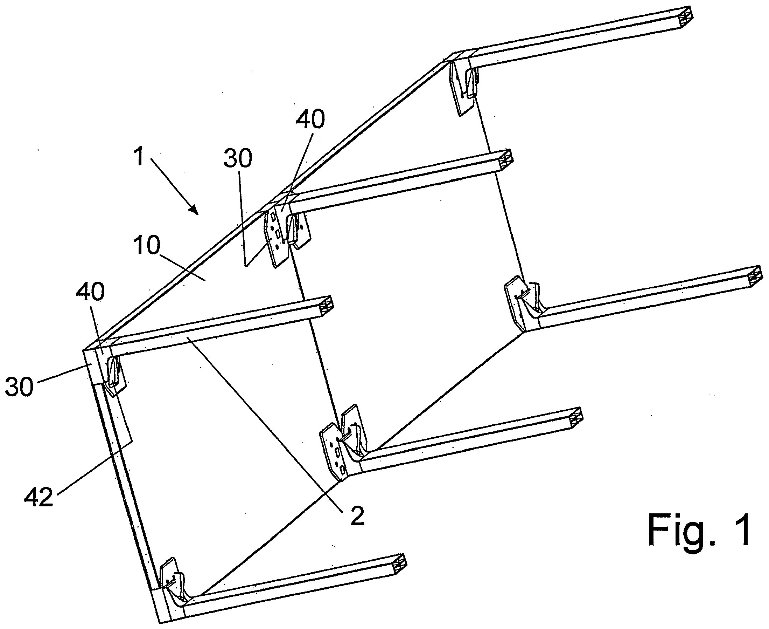

- Figur 1: eine perspektivische Ansicht von erfindungsgemäßen Verbindungseinrichtungen im montierten Zustand;
- Figur 2: eine perspektivische Explosionsdarstellung eines Teils der Verbindungseinrichtung vor der Montage;
- Figur 3: eine Detailansicht der Verbindungseinrichtung der Figur 2;
- Figuren 4 und 5: zwei perspektivische Ansichten des Halteelementes der Verbindungseinrichtung;
- Figur 6: eine perspektivische Ansicht der Verbindungseinrichtung vor der Montage;
- Figur 7: eine Detailansicht der Verbindungseinrichtung der Figur 6;
- Figuren 8 und 9: zwei perspektivische Ansichten des Zwischenstücks der Verbindungseinrichtung;
- Figuren 10, 11 und 12: drei Ansichten einer Möbelplatte mit einem montierten Zwischenstück der Verbindungseinrichtung;
- Figuren 13 -17: mehrere Ansichten des Montageteils der Verbindungseinrichtung.

Eine Verbindungseinrichtung für Möbel, insbesondere für Tische 1, dient zur Montage von Fußelementen 2, vorzugsweise jeweils Tischbeine. Die Verbindungseinrichtung ist an einer Möbelplatte 10 festgelegt und umfasst ein Halteelement 20, ein metallisches Zwischenstück 30 sowie ein Montageteil 40. An dem Montageteil 40 kann das Fußelement 2 festgelegt sein, beispielsweise kann das Fußelement 2 als Hohlprofil ausgebildet sein und an dem Montageteil 40 fixiert sein.

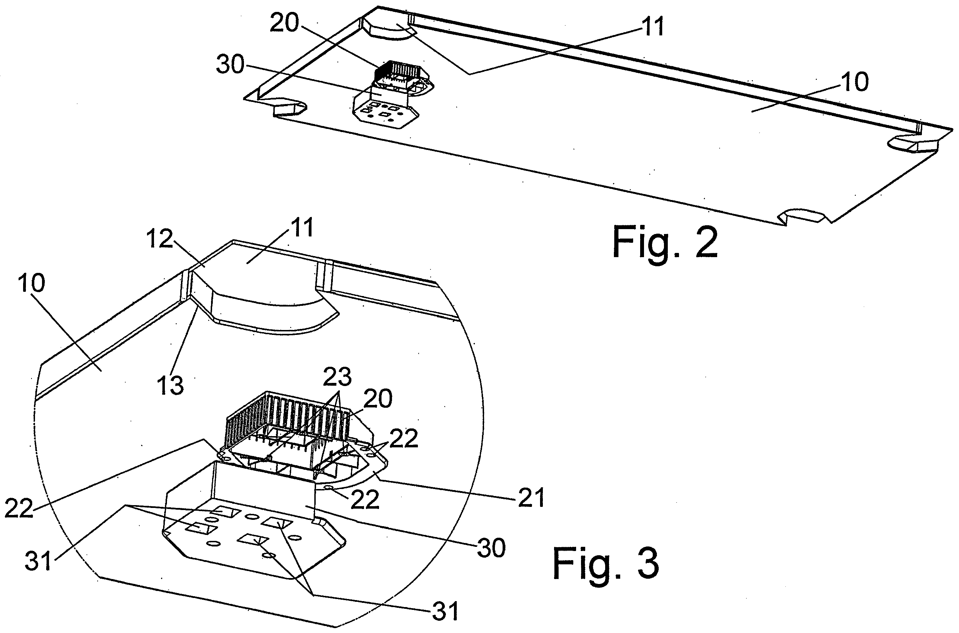

Wie in den Figuren 2 und 3 zu sehen ist, wird das Halteelement 20 an der Möbelplatte 10 festgelegt, wobei an der Möbelplatte 10 jeweils in den Eckbereichen eine Aufnahme 11 ausgebildet ist. Die Möbelplatte 10 ist als Wabenplatte ausgebildet und umfasst eine erste durchgehende Platte 12 und eine zweite durchgehende Platte 13, zwischen denen eine weitere Wabenplatte 14 angeordnet ist, die eine Vielzahl von Hohlräumen ausbildet, die Möbelplatte 10 in größerer Dicke ausgebildet sein kann, wobei nur ein geringes Eigengewicht vorhanden ist. Die Aufnahme 11 wird dadurch gebildet, dass die obere Platte 12 im Eckbereich hervorsteht und die untere Platte 13 sowie die Zwischenschicht 14 im Eckbereich ausgespart ist.

Das Halteelement 20 ist vorzugsweise aus Kunststoff ausgebildet und wird an der Möbelplatte 10 verklebt. Das Halteelement 20 ist schalenförmig ausgebildet und umfasst einen Boden 26, der an der Platte 11 festklebbar ist und einen hervorstehenden Flansch 21, an den Öffnungen 22 von Schrauben. Ferner sind an dem Halteelement 20 in einem Innenbereich auf der zu einem Zwischenstück 30 gewandten Seite Stege mit Schraubkanälen 23 ausgebildet, die mit Öffnungen 32 an dem Zwischenstück 32 fluchten, sodass ein Verschrauben des Zwischenstücks 30 an dem Halteelement 20 möglich ist. Das Zwischenstück 30 weist ferner rechteckige Aufnahmen 31 auf, die zur Verbindung mit dem Montageteil 40 dienen.

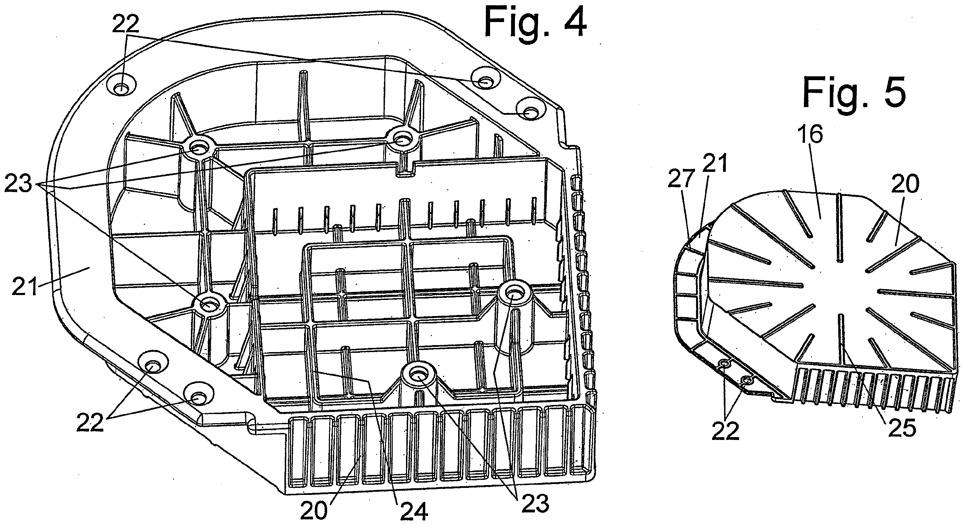

In den Figuren 4 und 5 ist das Halteelement 20 im Detail dargestellt. An dem Boden 26 des Halteelementes 20 sind Stege 25 mit einer Dicke von etwa 0,2-0,8, vorzugsweise 0,5mm ausgebildet, sodass die Fläche des Bodens 26 in geringem Abstand zu der Platte 11 angeordnet ist und somit zwischen den Stegen 25 Aufnahmen für Klebemittel vorgesehen sind. Entsprechend sind an dem Flansch 21 Stege 27 ausgebildet, die für einen geringen Abstand zwischen der Platte 13 und dem Flansch 21 sorgen, sodass der Flansch 21 mit der Platte 13 sicher verklebt ist. Zusätzlich können dann zur Sicherung noch Schrauben an dem Flansch 21 montiert werden.

An dem Halteelement 20 sind ferner in einem Innenbereich auf der zum Zwischenstück 30 gewandten Seite Stege 24 ausgebildet, die einerseits zur Verstärkung und andererseits zur Verbindung mit dem Zwischenstück dienen.

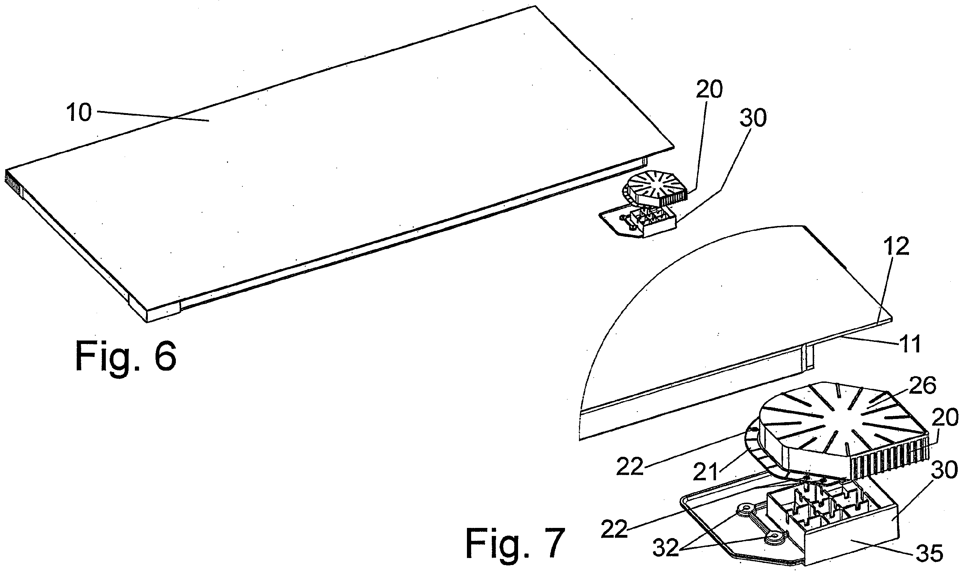

In den Figuren 6 und 7 ist eine Montagesituation der Verbindungseinrichtung gezeigt, wobei das Halteelement 20 mit der Platte 12 mit dem Boden 26 und mit der Platte 13 mit dem Flansch 21 verklebt wird. Anschließend wird das metallische Zwischenstück 30 aufgesteckt, wobei die Stege 24 mit entsprechenden Profilelementen des Zwischenstückes 30 verbindbar sind. Das Zwischenstück 30 weist ferner einen Rand 35 auf, der etwa senkrecht zu der Möbelplatte 10 angeordnet ist und einen Kantenschutz bildet, wobei die Höhe des Randes 35 etwa der Dicke der Möbelplatte 10 entspricht.

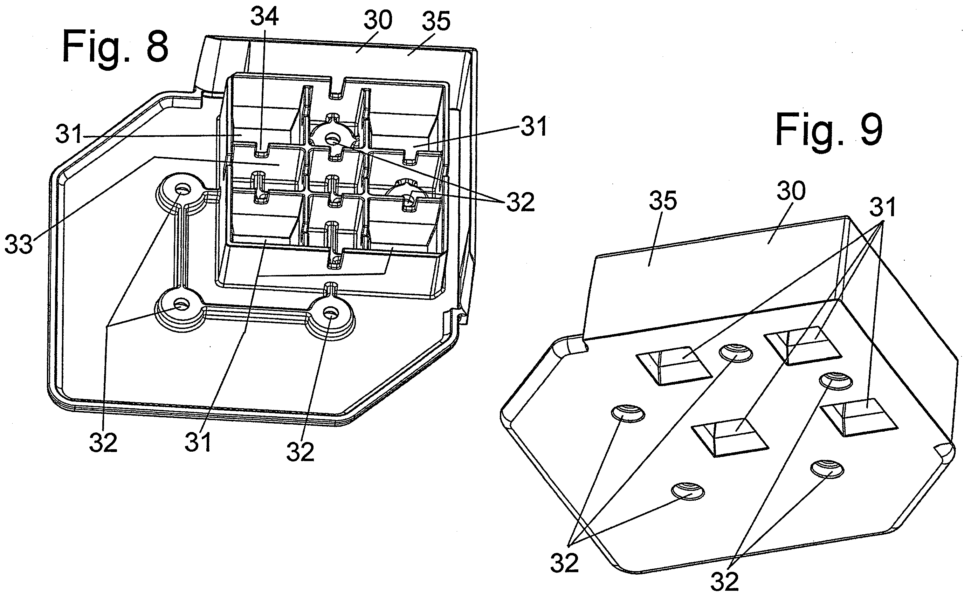

Wie in den Figuren 8 und 9 gezeigt ist, umfasst das metallische Zwischenstück auf der zum Halteelement 20 gewandten Seite ebenfalls Stege 33, an denen Nuten 34 ausgespart sind. In die Nuten 34 können die Stege 24 des Halteelementes 20 klemmend eingefügt werden. Ferner sind an dem Zwischenstück 30 Durchführungen 32 für Schrauben ausgebildet, sodass das Zwischenstück 30 fest an dem Halteelement 20 fixiert werden kann.

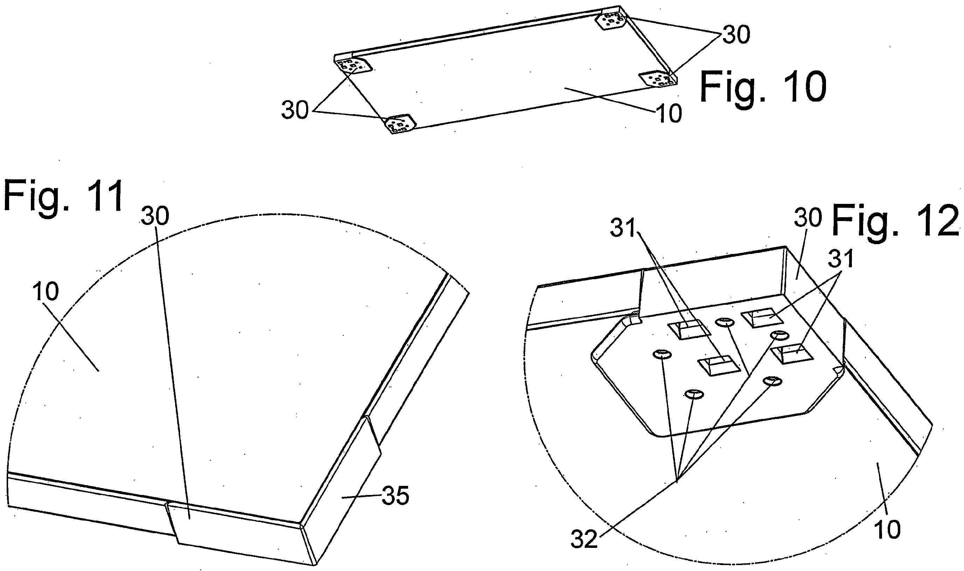

In den Figuren 10-12 ist eine Möbelplatte 10 gezeigt, an deren vier Ecken jeweils ein Halteelement 20 und ein Zwischenstück 30 festgelegt sind. Das Zwischenstück 30 weist jeweils einen Rand 35 auf, der im Bereich der Aufnahme 11 einen Kantenschutz bildet und somit eine Beschädigung im Eckbereich vermeidet.

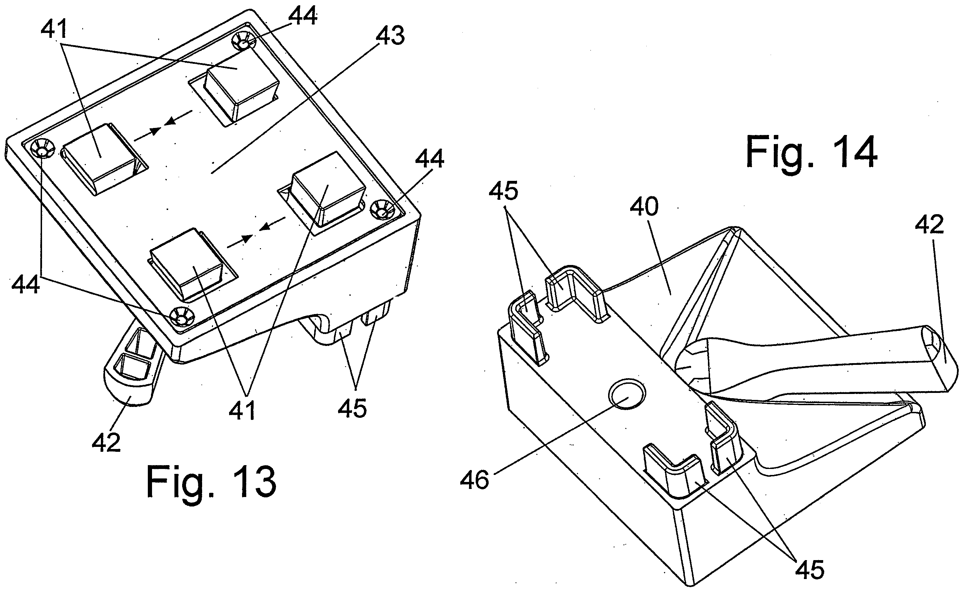

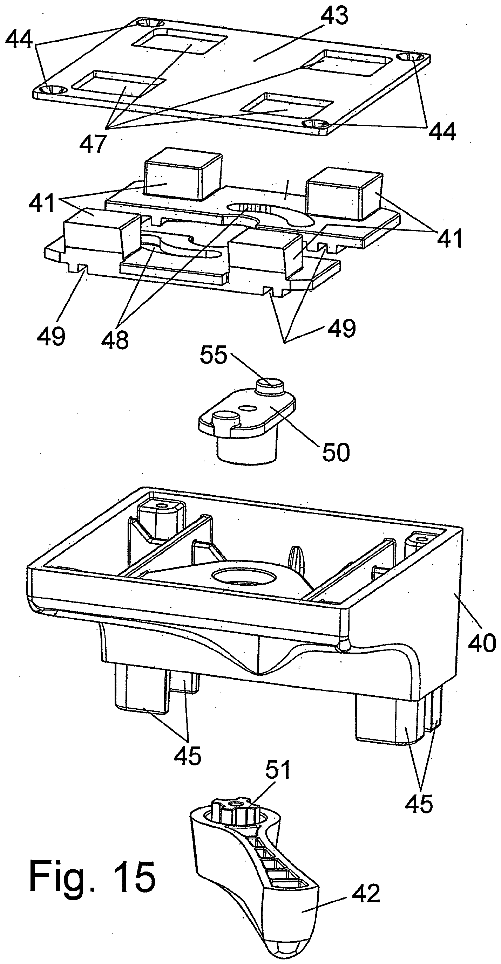

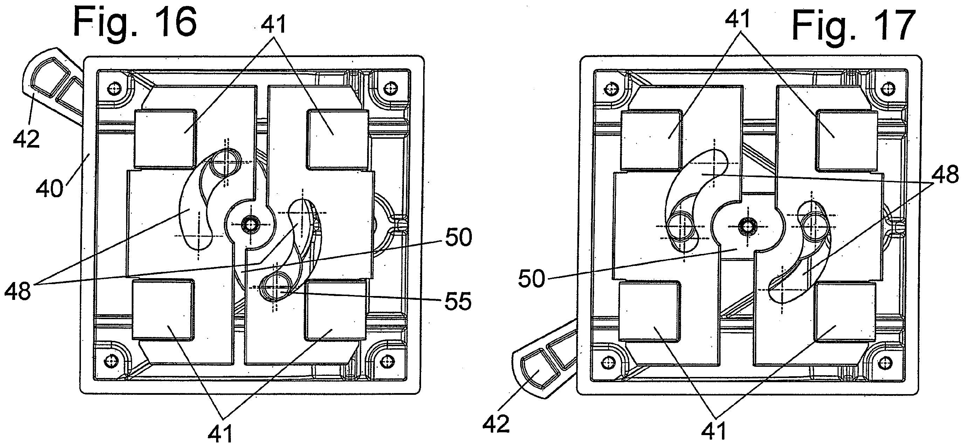

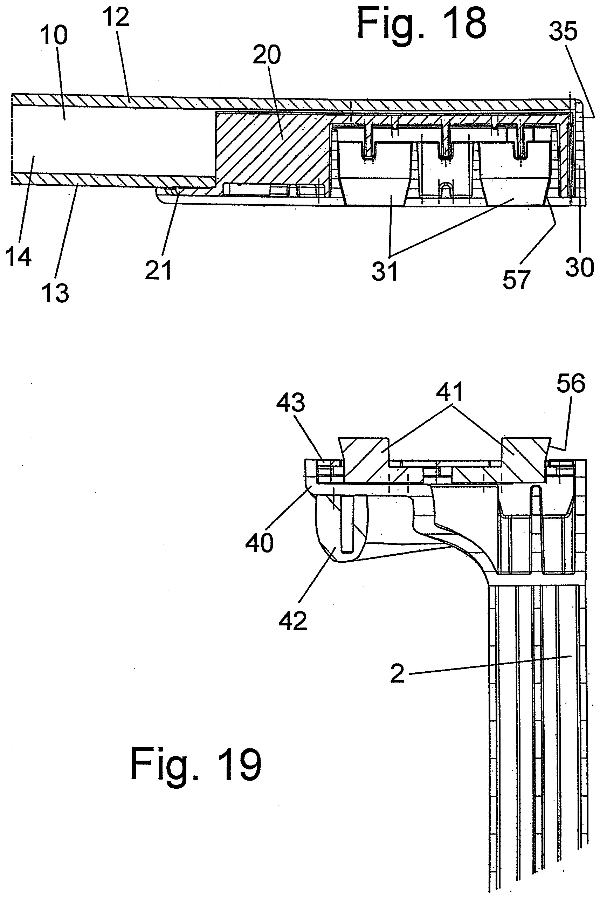

In den Figuren 13-17 ist das Montageteil 40 dargestellt, das zur Montage eines Fußelementes 2, beispielsweise eines Tischbeines, dient.

Das Montageteil 40 umfasst Klemmelemente 41 in Form von hervorstehenden Klötzen, die verschiebbar angeordnet sind. Die Klemmelemente 41 stehen dabei von einer Platte 43 hervor, an der Aussparungen ausgebildet sind, die größer als der Querschnitt der Klemmelemente 41 sind, sodass die Klemmelemente 41 innerhalb der Platte 43 bewegbar sind. Die Platte 43 ist über Schrauböffnungen in einem Gehäuse festlegbar, an dem ein Hebel 42 verschwenkbar gelagert ist. Ferner sind an dem Gehäuse Vorsprünge 45 ausgebildet, die in Hohlkammern eines Fußelementes eingreifen, damit das Fußelement klemmend oder mittels Klebverbindungen festlegbar ist. Ferner kann auch eine Schrauböffnung 46 in dem Gehäuse vorgesehen sein, um eine Festlegung mittels eines Schraubbolzens zu ermöglichen.

Die Klemmelemente 41 sind über eine Kurvenführung verschiebbar gelagert, wobei der Hebel 42 einen Zapfen 51 drehfest mit einem Drehelement 50 verbunden ist, an dem Scheibenförmige Bolzen 55 ausgebildet sind. Die Bolzen 55 greifen in eine nutförmige Kurvenführung 48 ein, die in einer Platte 58 ausgespart ausgespart ist. An der Platte 58 sind die Klemmelemente 41 angeformt, die Öffnungen 47 in der Platte 43 durchgreifen. Durch eine Drehbewegung 42 werden somit die Klemmelemente 41 über die Kurvenführung 48 und die Bolzen 55 verschoben, wobei jeweils zwei benachbarte Klemmelemente 41 in gegenüberliegende Richtungen bewegt werden, wobei jeweils zwei Klemmelemente 41 an einer Platte 58 festgelegt sind. Die Klemmelemente 41 weisen eine Schräge 56 auf, sodass sie sich zum Ende hin erweitern. Die Aufnahmen 31 an dem metallischen Zwischenstück 30 weisen ebenfalls eine Schräge 57 auf, die mit der Schräge 56 korrespondiert wenn die Klemmelemente 41 in die Aufnahmen 31 eingefügt sind, kann der Hebel 42 verschwenkt werden, wobei die Klemmelemente 41 nach außen bewegt werden, sodass eine klemmende Festlegung erfolgt. In diese Position ist das Fußelement 2 aus den Aufnahmen 31 aufgrund der Schrägen 56 und 57 nicht mehr herausziehbar.

In dem gezeigten Ausführungsbeispiel sind vier Klemmelemente 41 vorgesehen. Es ist natürlich auch möglich, nur zwei Klemmelemente 41 oder eine andere Anzahl von Klemmelementen 41 vorzusehen. Die Klemmelemente 41 werden in zwei Richtungen bewegt. Es ist natürlich auch möglich, die Klemmelemente 41 in radiale Richtung jeweils zu bewegen, um ein Verklemmen in mehrere Richtungen zu gewährleisten.

## Patentansprüche

1. Verbindungseinrichtung für Möbel (1), insbesondere zur Befestigung von Fußelementen (2), insbesondere Tischbeinen, wobei die Verbindungseinrichtung ein Halteelement (20) aufweist, das mit einer Möbelplatte (10) verbunden ist, und mit einem mit dem Fußelement (2) koppelbaren Montageteil (40),
wobei die Möbelplatte (10) als Wabenplatte ausgebildet ist, bei der zwischen zwei Platten (12, 13) eine wabenförmige Zwischenschicht (14) mit einer Vielzahl von Hohlräumen ausgebildet ist,
**dadurch gekennzeichnet dass** der Boden des Halteelementes (20) mit der ersten Platte (12) und der Flansch des Halteelementes mit der zweiten Platte (13) der Wabenplatte verklebt ist und dass an dem Halteelement (20) ein vorzugsweise metallisches Zwischenstück (30) festgelegt ist, an dem das Montageteil (40) montiert ist.

2. Verbindungseinrichtung nach Anspruch 1, **dadurch gekennzeichnet, dass** das Halteelement (20) in eine Aufnahme (11) der Möbelplatte (10) eingefügt ist.

3. Verbindungseinrichtung nach Anspruch 1 oder 2, **dadurch gekennzeichnet, dass** das Halteelement (20) schalenförmig ausgebildet ist und an einem Rand der zumindest teilweise parallel zu dem Boden (26) verlaufender Flansch (21) ausgebildet ist und das Halteelement (20) an dem Boden (26) und an dem Flansch (21) mit der Möbelplatte (10) verklebt ist.

4. Verbindungseinrichtung nach einem der Ansprüche 1-3, **dadurch gekennzeichnet, dass** an dem Boden (26) Stege (25) angeformt sind, sodass zwischen dem Boden (26) und einer benachbarten Fläche der Möbelplatte (10) Aufnahmen für Klebemittel ausgebildet sind.

5. Verbindungseinrichtung nach einem der Ansprüche 1-4, **dadurch gekennzeichnet, dass** an dem Boden (26) auf der zum Zwischenstück (30) gewandten Seite Profilierungen (24) ausgebildet sind, die mit Profilelementen (33) an dem Zwischenstück (30) koppelbar sind.

6. Verbindungseinrichtung nach Anspruch 5, **dadurch gekennzeichnet, dass** das Zwischenstück (30) über die Profilelemente (33) und die Profilierung (24) an dem Halteelement (20) zur Vorfixierung festklemmbar ist.

7. Verbindungseinrichtung nach einem der Ansprüche 1-6, **dadurch gekennzeichnet, dass** das Halteelement (20) aus Kunststoff hergestellt ist.

8. Verbindungseinrichtung nach einem der Ansprüche 1-7, **dadurch gekennzeichnet, dass** an dem metallischen Zwischenstück (30) mindestens eine hervorstehende Kante (35) als Kantenschutz für die Möbelplatte (10) ausgebildet ist.

9. Verbindungseinrichtung nach einem der vorherigen Ansprüche, **dadurch gekennzeichnet, dass** das Montageteil (40) Klemmelemente (41) aufweist, die für eine klemmende Festlegung über eine Kurvenführung (48, 50) verschiebbar sind.

10. Verbindungseinrichtung nach Anspruch 9, **dadurch gekennzeichnet, dass** an dem Montageteil (40) ein verschwenkbarer Hebel (42) gelagert ist, mittels dem die Klemmelemente (41) verschiebbar sind.

11. Verbindungseinrichtung nach einem der Ansprüche 9 oder 10, **dadurch gekennzeichnet, dass** die Klemmelemente (41) als hervorstehende Klötze ausgebildet sind, die in Aufnahmen (31) eingreifen.

12. Verbindungseinrichtung nach Anspruch 11, **dadurch gekennzeichnet, dass** die Klötze zumindest an einer Seite eine Schräge (56) aufweisen, und sich zum Ende hin erweitern.

13. Verbindungseinrichtung nach Anspruch 12, **dadurch gekennzeichnet, dass** vier Klemmelemente (41) vorgesehen sind, die in vier Aufnahmen (31) an dem Zwischenstück (30) eingefügt sind.

14. Verbindungseinrichtung nach Anspruch 14, **dadurch gekennzeichnet, dass** jeweils zwei Klemmelemente (41) über die Kurvenführung (48, 55) in gegenüberliegende Richtungen bewegbar sind.

15. Verbindungseinrichtung nach einem der Ansprüche 1 15, **dadurch gekennzeichnet, dass** die Möbelplatte (10) eine Tischplatte ist und das Montageteil (40) an einem Tischbein festgelegt ist.

## Claims

1. A connecting device for a piece of furniture (1), in particular for connecting foot elements (2), especially table legs, comprising: a holding element (20) connected to a furniture plate (10), and a mounting part (40) which can be coupled to the foot element (2), wherein the furniture plate (10) is formed as a honeycomb plate including a honeycomb material layer (14) having a plurality of hollow chambers, said honeycomb material layer being disposed between two plates (12, 13), **characterized in that** the base of the holding element (20) is adhesively bonded to the first plate (12) and the flange of the holding element is adhesively bonded to the second plate (13) of the honeycomb plate and wherein an intermediate piece (30) preferably made of metal is connected to the holding element (20), whereby the mounting part (40) is mounted to the intermediate piece.

2. The connecting device of claim 1, **characterized in that** the holding element (20) is positioned within a recess (11) in the furniture plate (10).

3. The connecting device of claim 1 or 2, **characterized in that** holding element (20) is tray-shaped and defines a flange (21) at least partially disposed along an edge, the flange being disposed parallel to the base (26), and wherein the holding element (20) is adhesively bonded to the furniture plate (10) via the base (26) and the flange (21).

4. The connecting device according to one of claims 1 to 3, **characterized in that** the base (26) includes webs (25) formed, so that receiving regions for receiving an adhesive to bond are defined between the base (26) and an adjacent surface of the furniture plate(10).

5. The connecting device according to one of claims 1 to 4, **characterized in that** the base (26) includes profiles (24) on the side facing the intermediate piece (30), said profiles (24) being engageable with profile elements (30) formed at the intermediate piece (30).

6. The connecting device of claim 5, **characterized in that** the intermediate piece (30) can be clamped prior to the installation via the profile elements (33) and the profiles (24) on the holding element (20).

7. The connecting device according to one of claims 1 to 6, **characterized in that** the holding element (20) is made of plastic.

8. The connecting device according to one of claims 1 to 7, **characterized in that** a protruding metallic edge (35) functioning as an edge protection for the furniture plate (10) is being provided on the intermediate piece (30).

9. The connecting device according to one of the preceding claims, **characterized in that** the mounting part (40) comprises clamping elements (41) moveable along a curved guide (48, 50) in order to achieve a clamping fixation.

10. The connecting device of claim 9, **characterized in that** the mounting element (40) comprises a pivotable lever (42) for moving the clamping elements (41).

11. The connecting device according to one of claims 9 or 10, **characterized in that** the clamping elements (41) the clamping elements are projecting blocks engaging with receivers (31).

12. The connecting device of claim 11, **characterized in that** an angled region (56) is provided on at least one side of the blocks, and the blocks widen towards an end.

13. The connecting device of claim 12, **characterized in that** two clamping elements (41) are provided, said clamping elements (41) engaging with four receivers (31) on the intermediate piece (30).

14. The connecting device of claim 14, **characterized in that** two clamping elements (41) are moveable along the curved guide (48, 55), respectively.

15. The connecting device according to one of claims 12 to 15, **characterized in that** the furniture plate (10) is a tabletop and the mounting part (40) is fixed to a table leg.

## Revendications

1. Dispositif d'assemblage de meubles (1), en particulier pour permettre de fixer des éléments de pied (2), en particulier des pieds de table, ce dispositif d'assemblage comprenant un élément de retenue (20) qui est relié à un plateau de meuble (10) ainsi qu'une partie de montage (40) pouvant être couplée à l'élément de pied (2), le plateau de meuble (10) étant réalisée sous la forme d'un plateau alvéolaire, dans lequel entre deux plaques (12, 13) est réalisée une couche intermédiaire (14) en forme de nids d'abeilles ayant une série de cavités,
**caractérisé en ce que**
le fond de l'élément de retenue (20) est collé à la première plaque (12) et la collerette de l'élément de retenue est collée à la seconde plaque (13) du plateau alvéolaire, et sur l'élément de retenue (20) est fixée une pièce intermédiaire (30) de préférence métallique sur laquelle est montée la partie de montage (40).

2. Dispositif d'assemblage conforme à la revendication 1,
**caractérisé en ce que**
l'élément de retenue (20) est inséré dans un logement de réception (11) du plateau de meuble (10).

3. Dispositif d'assemblage conforme à la revendication 1 ou 2,
**caractérisé en ce que**
l'élément de retenue (20) est réalisé en forme de coquille, sur l'un des bords de laquelle est réalisée la collerette (21) s'étendant au moins partiellement parallèlement au fond (26), et l'élément de retenue (20) est collé au plateau de meuble (10) sur son fond (26) et sur sa collerette (21).

4. Dispositif d'assemblage conforme à la revendication 1 à 3,
**caractérisé en ce que**
sur le fond (26) sont formées des nervures (25) de façon à obtenir entre le fond (26) et la surface voisine du plateau de meuble (10) des logements de réception d'un agent adhésif.

5. Dispositif d'assemblage conforme à l'une des revendications 1 à 4,
**caractérisé en ce que**
sur la face du fond (26) tournée vers la pièce intermédiaire (30) sont formés des profilages (24) qui peuvent être couplés à des éléments profilés (33) de la pièce intermédiaire (30).

6. Dispositif d'assemblage conforme à la revendication 5,
**caractérisé en ce que**
la pièce intermédiaire (30) peut être bloquée sur l'élément de retenue (20) par l'intermédiaire des éléments profilés (33) et des profilages (24) pour permettre sa fixation préalable.

7. Dispositif d'assemblage conforme à l'une des revendications 1 à 6,
**caractérisé en ce que**
l'élément de retenue (20) est réalisé en matériau synthétique.

8. Dispositif d'assemblage conforme à l'une des revendications 1 à 7,
**caractérisé en ce que**
sur la pièce intermédiaire métallique (30) est formée au moins une arête en saillie (35) constituant une arête de protection du plateau de meuble (10).

9. Dispositif d'assemblage conforme à l'une des revendications précédentes,
**caractérisé en ce que**
la partie de montage (40) comprend des éléments de blocage (41) susceptibles de coulisser sur un guidage à cames (48, 50) pour permettre une fixation par serrage.

10. Dispositif d'assemblage conforme à la revendication 9,
**caractérisé en ce que**
sur la partie de montage (40) est installé un levier pivotant (42) permettant de faire coulisser les éléments de blocage (41).

11. Dispositif d'assemblage conforme à l'une des revendications 9 et 10,
**caractérisé en ce que**
les éléments de blocage (41) sont réalisés sous la forme de blocs en saillie venant en prise dans des logements de réception (31).

12. Dispositif d'assemblage conforme à la revendication 11,
**caractérisé en ce que**
les blocs comportent un biseau (56) au moins sur un côté et s'élargissent vers leur extrémité.

13. Dispositif d'assemblage conforme à la revendication 12,
**caractérisé en ce qu'**
il est prévu quatre éléments de blocage (41) qui sont insérés dans quatre logements de réception (31) de la pièce intermédiaire (30).

14. Dispositif d'assemblage conforme à la revendication 13,
**caractérisé en ce que**
deux éléments de blocage (41) respectifs peuvent être déplacés dans les directions opposées sur le guidage à cames (48, 55).

15. Dispositif d'assemblage conforme à l'une des revendications 1 à 14,
**caractérisé en ce que**
le plateau de meuble (10) est un plateau de table et la partie de montage (40) est fixée sur un pied de table.
